(19) Europäisches Patentamt

European Patent Office

Office européen des brevets

(11) **EP 2 264 497 A1**

(12) **EUROPEAN PATENT APPLICATION**

(43) Date of publication:
**22.12.2010 Bulletin 2010/51**

(51) Int Cl.:
***G02B 6/38*** *(2006.01)* ***G02B 6/44*** *(2006.01)*

(21) Application number: **10006046.6**

(22) Date of filing: **11.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **19.06.2009 US 218874 P**

(71) Applicant: **Corning Cable Systems LLC Hickory, NC 28601 (US)**

(72) Inventors:
• **Rhoney, Brian K.**
**Hickory, NC 28601 (US)**
• **Ugolini, Alan W.**
**Hickory, NC 28601 (US)**
• **Whitehead, Aaron Scott**
**Morganton, NC 28655 (US)**

(74) Representative: **Sturm, Christoph et al**
**Quermann Sturm Weilnau**
**Patentanwälte**
**Unter den Eichen 7**
**65195 Wiesbaden (DE)**

(54) **Fiber optic module assembly having improved finger access and labeling indicia**

(57) A fiber optic module assembly is disclosed herein having improved finger access, the module assembly of the disclosure also having pairs of adapters received in common adapter apertures (20A) perpendicular to a longitudinal axis for improved finger access. The fiber optic module assembly of the disclosure, the housing further having labeling indicia relating to port locations and optical input/output channels associated with the port locations, and the assembly also including a universal wired fiber optic harness (55).

EP 2 264 497 A1

**Description**

**FIELD OF THE DISCLOSURE**

The disclosure relates generally to a fiber optic module assembly having improved finger access, and specifically to a high density fiber optic module assembly having shuttered adapters with improved finger access with port and optical channel labeling indicia, including a labeling key.

**BACKGROUND**

The ever increasing need for more capacity drives the development of high density data center solutions. Current practice in telecommunications is to utilize standard electronics racks or frames that support standards-sized stationary rack-mounted housings with widths of 19 or 23 inches horizontal spacing. Vertical spacing has been divided into rack units "U", where IU=1.75 inches as specified in EIA (Electronic Industries Alliance) 310-D, IEC (International Electrotechnical Commission) 60297 and DIN ("German Institute for Standardization") 41494 SC48D. A rack mounted 4U shelf can accommodate up to 12 vertically oriented sub-panels, referred to hereinafter as fiber optic modules, each able to carry up to 24 individual optical channels, or 12 optical ports (two optical channels per port). In the past the 12 port fiber optic module comprised 12 distinct, longitudinally oriented adapter apertures, each with its own adapter, usually the LC duplex adapter. This proves challenging in terms of finger access as such an arrangement requires the apertures, and the adapters, to reside closely together due to size constraints of the module housing.

Other industry standards, such as TIA-606-A, Addendum 1, provide parameters for data center administration. As data centers get more crowded, tracking the fibers, ports, sub-panels, panels and floor space becomes more challenging and requires a methodical approach. Labeling starts with the floor grid coordinates to establish the geographic location of a rack of hardware. It then moves to the vertical location of the rack itself, specifically the "U" location of the top of the hardware in the rack from the floor up. Then each piece of rack mounted hardware is divided into panels or sub-panels, as many as 12 sub-panels in a 4U sized patch panel. Each sub-pancl, or fiber optic module, is typically labeled according to the number of ports it contains. Sometimes, with each port comprising two optical channels, the optical channels are labeled rather than the ports.

A high density fiber optic module solution is needed that improves finger access to the connectors in the adapter arrays and provides pre-printed labeling of both the ports and the optical channels.

**SUMMARY**

The disclosure relates generally to a fiber optic module assembly and specifically to a high density fiber optic module assembly with improved finger access and labeling indicia. The module assembly of the disclosure has front adapter apertures commonly defining two distinct port locations including the labeling indicia for the port locations and for the optical channels associated with each port location, and a labeling key. The assembly comprises a plurality of first connector adapters, a plurality of second connector adapters, a fiber optic module housing and at least one fiber optic harness. The first connector adapters and the second connector adapters are duplex adapters able to receive and optically mate two pairs of single fiber optical connectors, such as LC connectors. The fiber optic module housing has a front surface and a back surface, the front surface defining a plurality of front adapter apertures, wherein a first connector adapter and a second adapter aperture are received by a common front adapter aperture. The first connector adapter defines a first port and the second connector adapter defines a second port. Thus, each front adapter aperture defines two distinct port locations and has indicia to identify the respective port locations.

The duplex adapters define two receptacles capable of receiving and optically mating two pairs of single fiber optical connectors. Each mated pair of single fiber optical connectors defines an optical channel, wherein a pair of optical channels defines a port, the port having one optical input channel and one optical output channel. The front adapter aperture, respectively receiving a first connector adapter and a second connector adapter, has indicia to label each port location and each respective optical channel pair for each port location.

The fiber optic harness comprises at least a first connector, a second connector, a third connector and optical fibers, wherein the first and second connectors are optically interconnected to the third connector by the optical fibers. The fiber optic harness preferably comprises a plurality of first and second connectors being optically interconnected to a third connector, wherein first and second connectors are LC connectors and the third connector is a multi-fiber optical connector such as a MTP or MPO connector, and is housed in the interior space partially defined by the front surface and the back surface. The fiber optic harness is preferably a universal wired fiber optic harness, though other wiring schemes may be used. The fiber optic module housing further has at least one back adapter aperture defined by the back surface, wherein the third connector is received by a third connector adapter received by the at least one back adapter aperture.

**BRIEF DESCRIPTION OF THE FIGURES**

Embodiments of the disclosure are illustrated by the accompanying drawings, in which:

Fig. 1 shows a fiber optic module assembly as known in the art;

Figs. 2A-2C show embodiments of adapters of the disclosure;

Figs. 3A and 3B show two views of the fiber optic module housing and duplex adapters of the disclosure;

Fig. 4 shows the improved finger access of the module assembly of the disclosure;

Fig. 5 shows the relationship of dimensions of the shuttered duplex adapter and the front adapter aperture;

Figs. 6A-C show a front view of various embodiments of the module of the disclosure;

Fig. 7A shows a labeling scheme found in prior art, and Figs. 7B-D show labeling embodiments of the disclosure;

Fig. 8 shows a partially exploded view of the fiber optic module assembly of the disclosure;

Fig. 9A and 9B shows a fiber optic module assembly of the disclosure with the lid removed and fiber wiring revealed; and

Fig. 10 shows a schematic representation of the universal wiring used in the disclosure.

**DESCRIPTION**

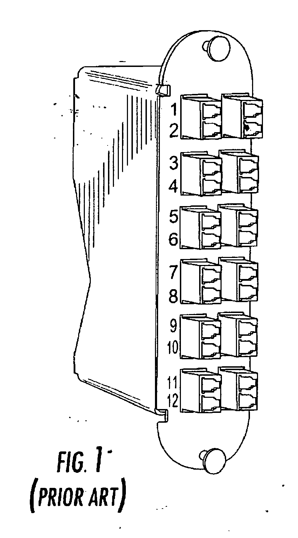

The disclosure relates generally to a fiber optic module assembly and specifically to a high density fiber optic module assembly with improved finger access and improved labeling indicia over the prior art. Fig. 1 shows a fiber optic module assembly as known in the prior art. Said assembly has twelve fiber optic adapters situated individually and in a longitudinal orientation in a 2 x 6 array. In such a module, if fully populated by patch cables (not shown), the craft must engage the crowded module face to remove or replace a duplex connector, which in the past presented tactile issues with hand accessibility and visual issues by obscuring labeling indicia. Fiber optic modules found in the art utilized this adapter array to accommodate the duplex adapter design as found in the prior art, such designs having retaining clips and flanges oriented on either side of the adapter body along side the connector receptacles. The adapters in the art were unable to reside horizontally in a common aperture, which is a much more natural orientation. The improved orientation as seen in the disclosure improves finger access without sacrificing port density and greatly improves visibility of the necessary labeling indicia.

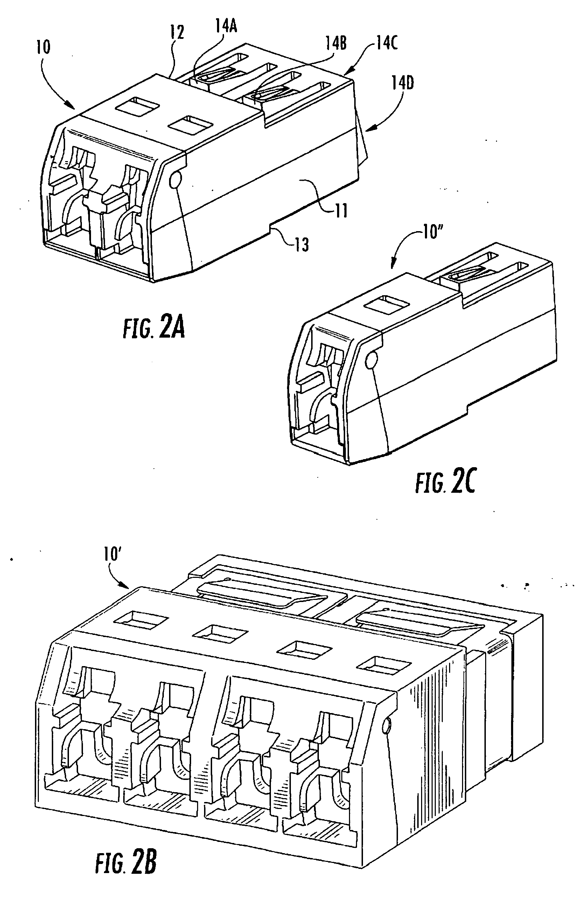

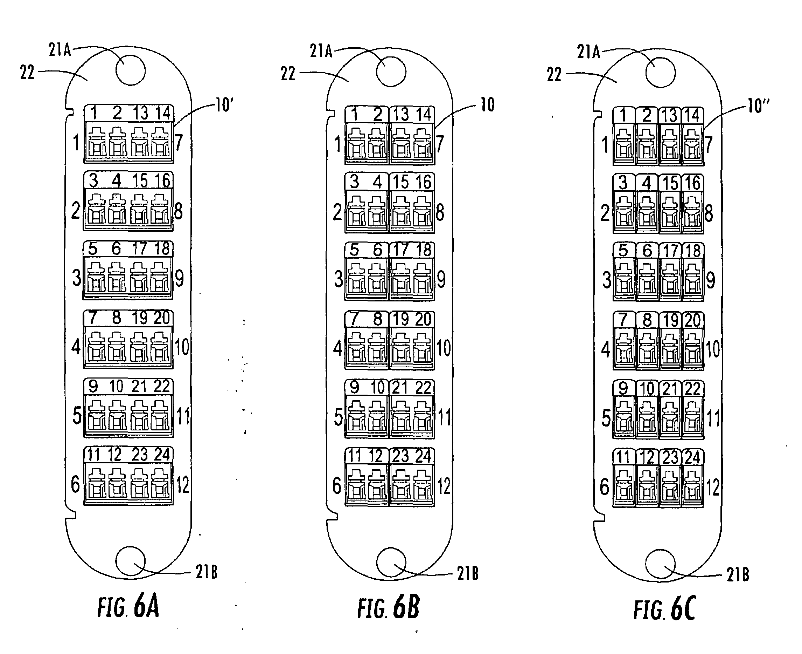

The fiber optic module assembly of the disclosure has a first connector adapter and a second connector adapter, wherein the first and second connector adapters are duplex connector adapters, preferably LC shuttered duplex adapters as disclosed in U.S Pat. Ser. No. 12/231,144 filed August 29, 2008 to Corning Cable Systems LLC. Turning now to Fig. 2A, the shuttered duplex adapter 10 as disclosed in the '144 filing provides improved geometry that facilitates installation into a fiber optic module housing that allows alternative orientation and improves finger access. The shuttered duplex adapter 10 has smooth side wall 11 on each side rather than side flanges. Upper and lower flanges 12 and 13 interact with latches 14A-D to lock the shuttered duplex adapter 10 to a planar surface through an aperture. As seen in the '144 filing, orienting the retention features (12, 13 and 14A-D) of the improved shuttered duplex adapter 10 above and below the connector receptacles allows two shuttered duplex adapters 10 to reside within a common aperture, forming a 1 x 4 connector receptacle array (two 1 x 2 adapters). Fig. 2B shows shuttered quad adapter 10' of the '144 filing that functions the same as two shuttered duplex adapters 10, forming another embodiment of a I x 4 connector receptacle array (one 1 x 4 adapter). Fig. 2C shows shuttered simplex adapter 10", made in the same manner as shuttered duplex adapter 10, suitable for inserting into a common front adapter aperture (see Fig. 6C) with three other shuttered simplex adapters 10" to form another embodiment of a 1 x 4 connector receptacle array (four 1 x 1 adapters) . In another embodiment (not shown) two shuttered simplex adapters 10" may be combined in a common aperture with shuttered duplex adapter 10 to form yet another embodiment of a 1 x 4 connector receptacle array (two 1 x 1 adapters and one 1 x 2 adapter).

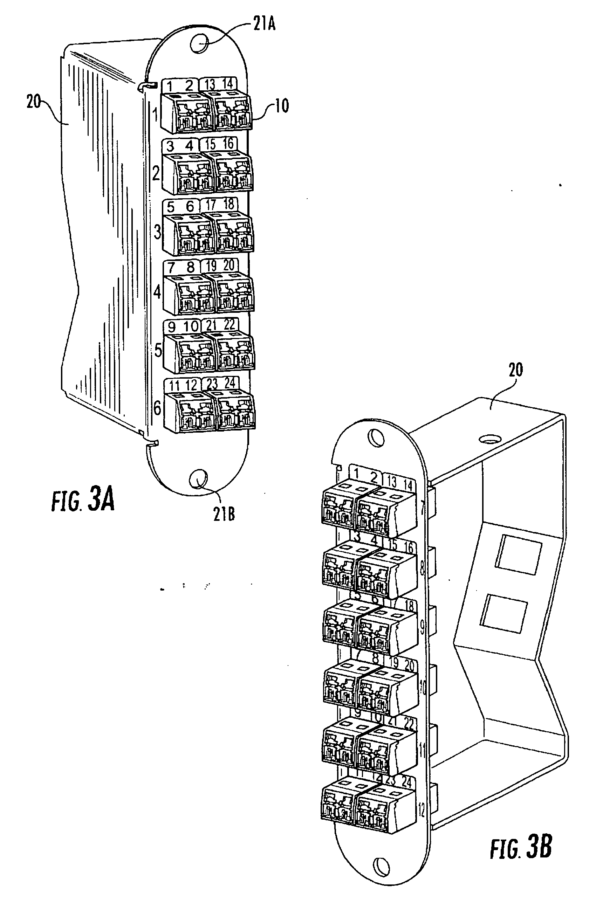

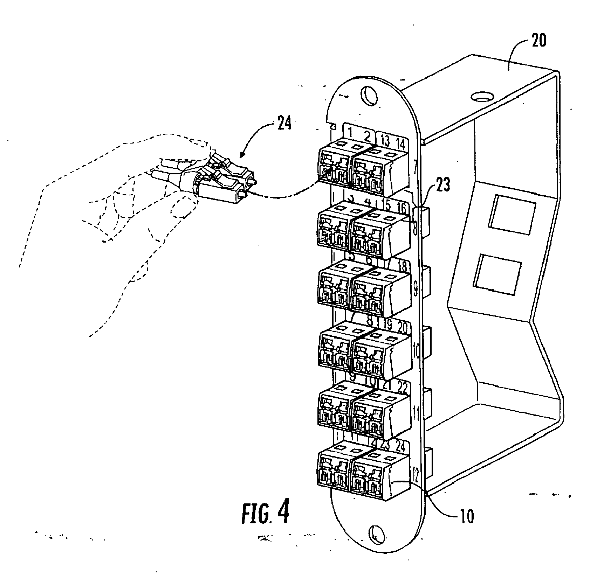

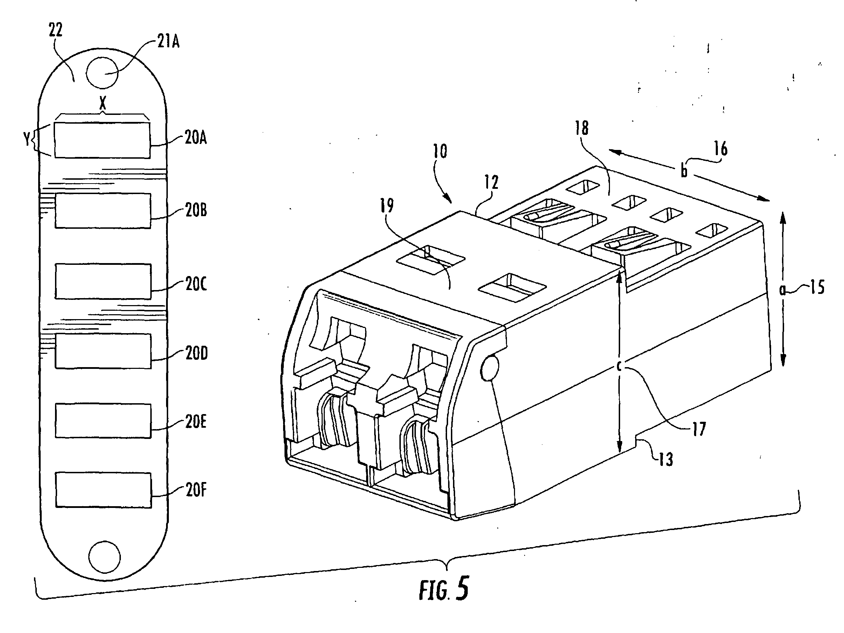

Figs. 3A and 3B show fiber optic module housing 20 having a plurality of shuttered duplex adapters 10. Fiber optic module housing 20 has latch apertures 21A and 21B defining a longitudinal axis, wherein the plurality of shuttered duplex adapters 10 are in perpendicular arrays relative to said longitudinal axis. The smooth side wall 11 on each side of the shuttered duplex adapter 10 enables two adapters to be received in a common aperture 20A defined by front surface 22 (see Fig. 5). This orientation allows fiber optic module housing 20 to have the same footprint of-the prior art fiber optic module assembly seen in Fig. 1 but with at least 30% more spacing between adjacent adapter arrays. As seen in Fig. 4, adapter array spacing 23 between adjacent adapter arrays in a preferred embodiment of the disclosure is about 8 mm or greater. This greatly improves finger access, allowing easier hand installation of duplex connector 24.

Fig. 5 shows front adapter apertures, 20A, found on front surface 22 of fiber optic module housing 20. The relationship of width dimension X and height dimension Y of front adapter aperture 20A to dimensions 15-17 of shuttered duplex adapter 10, wherein dimension a is the height of insert portion 18 (15), dimension b is the width of shuttered duplex adapter 10 (16) and c is the height of external portion 19 (17), is as follows:

$$Y \text{ to } 15: a = (93\% \text{ to } 95\%)(Y)$$

$$X \text{ to } 16: b = (46\% \text{ to } 49\%)(X)$$

$$X \text{ to double } 16: 2b = (94\% \text{ to } 97\%)(X)$$

$$Y \text{ to } 17: c = (110\% \text{ to } 117\%)(Y)$$

Further, dimension a relates to dimension c as follows:

$$15 \text{ to } 17: a = (79\% \text{ to } 86\%)(c)$$

These proportions permit the insertion of two shuttered duplex adapters 10 into a common front adapter aperture 20A. Fiber optic module housing 20 preferably has six front adapter apertures 20A-F, each with the same proportional relationship with the shuttered duplex adapter 10, permitting six common pairings of twelve shuttered duplex adapters 10.

Figs. 6A-C reiterates the various embodiments of the improved finger access by way of perpendicular orientation of the disclosure above. Fig. 6A shows six shuttered quad adapters 10' within six front adapter apertures 20A-F. Fig. 6B shows twelve shuttered duplex adapters 10, two each respectively in each of the six front adapter apertures 20A-F. Fig. 6C shows twenty-four shuttered simplex adapters 10", four each respectively in the six front adapter apertures 20A-F.

The labeling indicia of the disclosure include port labels and the optical channels labels associated with each respective port. This provides a convenience for the craft, wherein some of whom may prefer labeling at the port level, some of whom at the optical channel (fiber) level. At the sub-panel level it is beneficial to include both labeling schemes relative to the port locations and format them in a manner that meets guidelines set by the Telecommunications Industry Association (TIA) in their document TIA-606-A-1, *Administration Standard for Commercial Telecommunications Infrastructure Addendum 1, Administration of Equipment Rooms and Data Center Computer Rooms.* The fiber optic module assemblies of the disclosure may be grouped together in a single rack mounted shelf and tracked as "sub-panels." Typically, each subpanel is designated by a label as a discrete unit within the shelf. The shelf is given its own designation relative to its height, in "rack units" (U) from the floor, while the racks (not shown) are mapped on a grid. At the sub-panel level, labeling implies either the individual ports, meaning a pair of input/output optical channels, or the input/output optical channels themselves. As seen in the disclosure, it is advantageous to provide both labeling schemes.

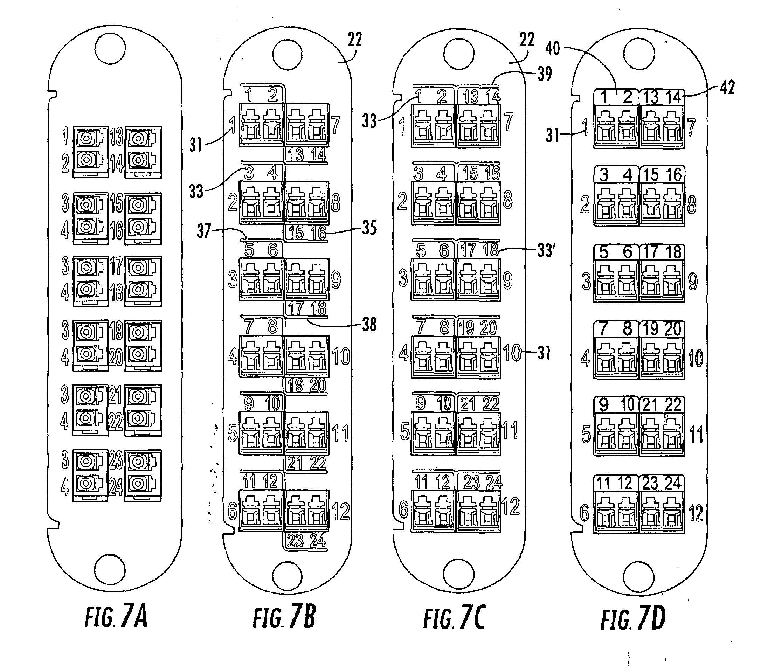

The labels themselves are installed using a pad printing process well known in the art, whereby ink is applied to a 3-dimensional object. A simple font such as Arial that does not include serifs is required by the TIA standard. Fig. 7A shows the labeling indicia of the prior art of Fig. 1, which has only the optical input/output channels labeled top to bottom then left to right when in the vertical orientation. Figs. 7B-D show the various labeling indicia embodiments of the disclosure, though it is understood that other embodiments may be possible and the disclosure is in no way limited to the embodiments illustrated herein. Fig. 7B shows port labels 31 using Arabic numerals beginning with the numeral "1" for port number one on the left of the top front adapter aperture 20A. Each front adapter aperture 20B-F has a subsequent Arabic numeral on the left side of the aperture, ending in numeral "6" for port six. The port numbering scheme resumes on the top, right side of the front adapter apertures, beginning again with front adapter aperture 20A labeled with the numeral "7" for port number seven This continues as on the left side, down the front surface until front adapter aperture 20F has the numerals "12" for port number twelve on its right side.

Front surface 22 further has pairs of Arabic numerical values above each aperture and on substantially the left side, correlating left side optical input/output channel labels 33 with the left side port locations. Optical input/output channels for port number one have Arabic numerical values "1-2", indicating optical channels one and two that are affiliated with port number one. Each left side port location has its optical input/output channels labeled in sequence, having in turn subsequent pairs of Arabic numerical values on substantially the left side and above the front adapter apertures until port number six has its labels "11-12". The labeling of the right side (lower) optical input/output channels 35 resumes on the right side. However, the Arabic numerical values are located below each respective front adapter aperture for ports seven through twelve.

Indicia found on Fig. 7B are solid white font without serifs on a dark housing background. Indicia include a decorative partial border 37, 38 that starts at an imaginary dividing plane and sweeps up or down and above or below, respectively, until the border reaches the opposing outer planes of the adjacent adapters.

Fig. 7C is another embodiment, similar to Fig. 7B, but with indicia above the front adapter apertures on both the left and right of the imaginary dividing plane. The left side seen in the embodiment of Fig. 7C is identical to the embodiment seen in Fig. 7B. Port labels 31 on the left and right sides are in the same relative position as in Fig. 7B. The right side, however, has optical input/output channel indicia above the respective port location rather than below. Left side (upper) optical input/output channel labels 33' are above the respective port location along with partial border (upper) 39.

Fig. 7D has optical input/output channel tabbed indicia 40, above the front adapter apertures 20A-F on both the right and left. Port labels 31 are as seen in the previous embodiments. Optical input/output channel tabbed indicia 40 is an applied white tab having the Arabic numeral channel indicia 41 as a "negative" image 42 in the white tab of the optical input/output channel tabbed indicia 40.

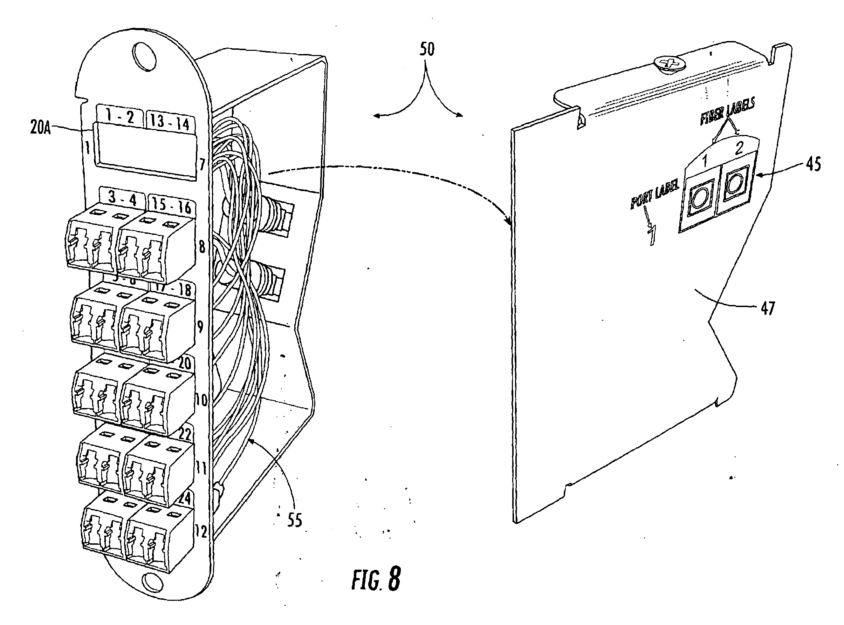

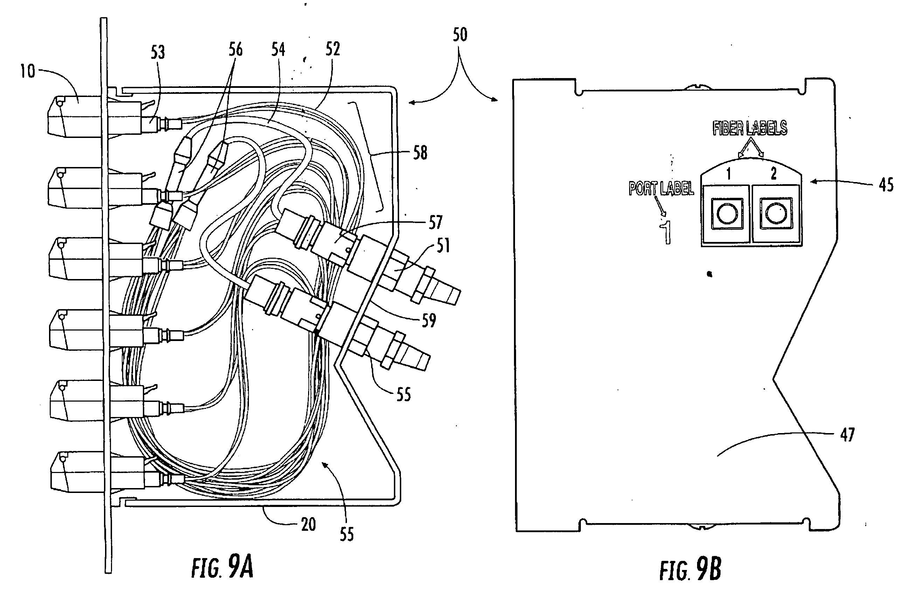

In addition to the labeling indicia in Fig. 7B-D, the disclosure provides an informational labeling key 45 located on removable lid 47 as seen in Figs. 8 and 9A-B, though other locations are possible. The optical input/output channel labels are indicated by the label "FIBER LABELS" and the port labels indicated by the label "PORT LABEL," adjacent to a stylized image of the front of a two channel port. All labeling key indicia are in the relative positions as is seen in the various embodiments, though other relative positions may convey the same information.

Figs. 8 and 9A-B show a partially exploded view of fiber optic module assembly 50, further including fiber optic harness 55. Fiber optic module assembly 50 comprises at least one first connector 53 and preferably a plurality of first connectors 53, such as an LC, SC or similar single fiber connector, that engages shuttered duplex adapter 10; optical wave guides 58, preferably wherein a fiber optic ribbon 54 breaks out via furcation 56 into individual optical fibers 52; and a third connector 57, preferably a multi-fiber connector such as an MTP or MPO connector. The plurality of first connectors 53 are in optical communication with the third connector 57 via the optical wave guides 58. Third connector 57 is received by third connector adapter 51 on back surface 59 of fiber optic module housing 20. Shuttered duplex adapter 10 is received through one of front adapter apertures 20A-F defined by front surface 22.

**A**

| Ports | Optical Channels | Ribbon Orientation Right to Left | | | | |
|---|---|---|---|---|---|---|
| | | Fiber # -color | | | Fiber # -color | |
| 1 | 1-2 | 1-BLUE | 121 | to | 12-AQUA | 132 |
| 2 | 3-4 | 2-ORANGE | 122 | to | 11-ROSE | 131 |
| 3 | 5-6 | 3-GREEN | 123 | to | 10-VIOLET | 130 |
| 4 | 7-8 | 4-BROWN | 124 | to | 9-YELLOW | 129 |
| 5 | 9-10 | 5-SLATE | 125 | to | 8-BLACK | 128 |
| 6 | 11-12 | 6-WHITE | 126 | to | 7-RED | 127 |

**B**

| Ports | Optical Channels | Ribbon Orientation Right to Left | | | | |
|---|---|---|---|---|---|---|
| | | Fiber # -color | | | Fiber # -color | |
| 7 | 13-14 | 1-BLUE | 121 | to | 12-AQUA | 132 |
| 8 | 15-16 | 2-ORANGE | 122 | to | 11-ROSE | 131 |
| 9 | 17-18 | 3-GREEN | 123 | to | 10-VIOLET | 130 |
| 10 | 19-20 | 4-BROWN | 124 | to | 9-YELLOW | 129 |
| 11 | 21-22 | 5-SLATE | 125 | to | 8-BLACK | 128 |
| 12 | 23-24 | 6-WHITE | 126 | to | 7-RED | 127 |

**Table 1**

Referring to Table 1, two fiber optic harnesses A and B have their respective ports and optical channels identified. Fiber optic harness A and B are housed within an interior portion of fiber optic module housing 20 partially defined by front surface 22 and back surface 59. Fiber optic harness A is "above" fiber optic harness B. Fiber optic harness A provides the optical interface for the left side of the fiber optic module assembly of the disclosure, while fiber optic harness B provides the optical interface for the right side of the fiber optic module assembly of the disclosure. Both fiber optic harnesses A and B are preferably universal wired harnesses, discussed in more detail below.

The fiber optic harness of the disclosure may be wired in any configuration as deemed necessary by the craft, but is preferably a universal wired harness. The universal wiring of the fiber optic harness of the above disclosure will now be described in detail by incorporating in part U.S. Pat. Ser. No. 10/256,799, namely column 3, lines 6-31, filed Sep. 27, 2002 to Coming Cable Systems, LLC.

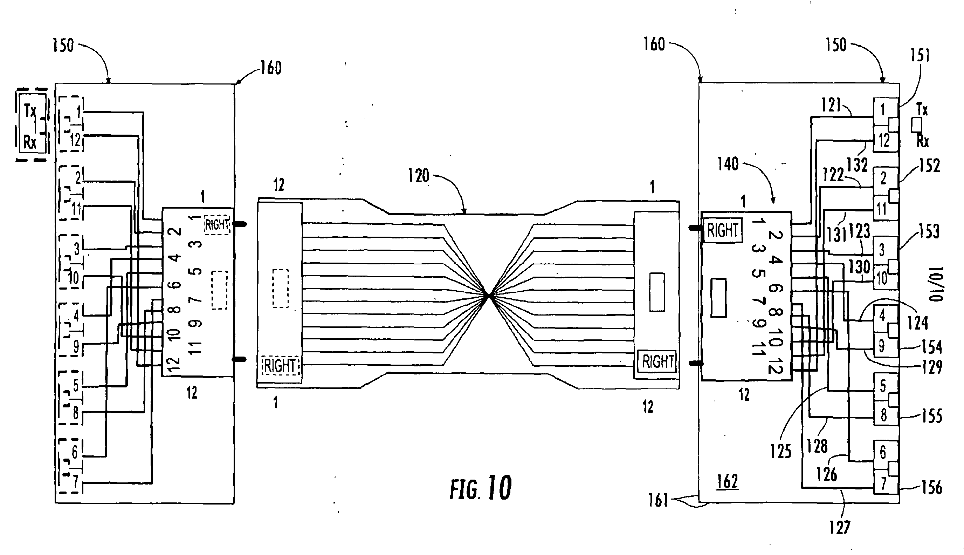

Fig. 10 illustrates an exemplary fiber wiring scheme for routing of optical fibers from connector 140 to single or multi-fiber connectors located at connector stations 151-156, defined at a break-out section 150 of module 160. Each connector station 151-156 preferably includes one or more connectors. In the module, an exemplary routing scheme is the following: fiber number 1 (blue) is paired with fiber number 12 (aqua); fiber number 2 (orange) is paired with fiber number 11 (rose); fiber number 3 (green) is paired with fiber number 10 (violet); through the remaining numbers/colors of fiber with the last pair being fiber number 6 (white) with fiber number 7 (red). With reference to Fig. 10, the fiber pairs are defined as follows: 121-132; 122-131; 123-130; 124-129; 125-128; and 126-127. At least one but preferably at least 80% of the fiber pairs routed to respective connector stations 151-156 are made by fibers not immediately adjacent in the optical fiber ribbon 120. In other words, the optical paths of connector 140 and the optical connectors at stations 151- 156 are optically interconnected by optical fibers disposed in cavity 162 of the module 160, the fiber pairs being formed by the optical fibers. At least one of the fiber pairs being in optical communication with respective optical paths in connector 140 and being routed to a respective connector station, the at least two optical paths being selected from optical paths not being immediately adjacent to each other. Preferably, 80% of said fiber pairs optically can be interconnected with the optical paths are selected from optical paths not being immediately adjacent to each other.

The foregoing is a description of various embodiments of the disclosure that are given here by way of example only. Although a fiber optic module assembly according to the disclosure has been described with reference to preferred embodiments and examples thereof, other embodiments and examples may perform similar functions and/or achieve similar results. All such equivalent embodiments and examples are within the spirit and scope of the present invention and are intended to be covered by the appended claims.

**Claims**

1.   A fiber optic module assembly, the assembly comprising:

   at least one first connector adapter defining a first port;
   at least one second connector adapter defining a second port;
   a fiber optic module housing, the module housing having a front surface and a back surface partially defining an interior space, wherein the front surface receives the at least one first and at least one second connector adapters in a common front adapter aperture; and
   labeling indicia.

2.   The module assembly of claim 1, wherein the first connector adapter and second connector adapter are duplex adapters.

3.   The module assembly of claim 1 or 2, the fiber optic module housing further including a third connector adapter, wherein the back surface receives the third connector adapter in a back adapter aperture, wherein the third connector adapter is a multi-fiber connector adapter.

4.   The module assembly as claimed in one of the claims 1 to 3, the labeling indicia including port marking indicia and optical channel marking indicia.

5.   The module assembly as claimed in one of the claims I to 4, wherein the labeling indicia includes a labeling key.

6.   The module assembly as claimed in one of the claims I to 5, wherein adjacent front adapter apertures are spaced apart about 8mm or greater for finger access.

7.   The module assembly as claimed in one of the claims 1 to 6, wherein the fiber optic module housing has six front adapter apertures receiving six first connector adapters and six second connector adapters.

8.   The module assembly as claimed in one of the claims 1 to 7, the assembly further including at least one fiber optic harness received in the interior space, wherein the at least one fiber optic harness has at least one first connector, at least one second connector, and a third connector, the first and second connectors being optically interconnected therein by optical fibers to the third connector.

9.   The module assembly of claim 8, wherein the at least one first and the at least one second connector are duplex connectors, each defining two optical channels, and the third connector is a multi-fiber connector defining a plurality of optical channels.

10. The module assembly of claim 9, wherein the fiber optic harness has a plurality of respective first and second connectors optically interconnected therein by optical fibers to the third connector, the third connector being selected from the group consisting of MTP and MPO connectors.

11. The module assembly of claim 10, wherein the fiber optic harness is a universal wired fiber optic harness.

FIG. 1
(PRIOR ART)

FIG. 2A

FIG. 2C

FIG. 2B

FIG. 3A

FIG. 3B

FIG. 4

FIG. 5

EP 2 264 497 A1

FIG. 6A

FIG. 6B

FIG. 6C

FIG. 8

EP 2 264 497 A1

FIG. 9A

FIG. 9B

EP 2 264 497 A1

**FIG. 7A**

**FIG. 7B**

**FIG. 7C**

**FIG. 7D**

FIG. 10

Europäisches
Patentamt

European
Patent Office

Office européen
des brevets

**EUROPEAN SEARCH REPORT**

Application Number

EP 10 00 6046

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 6 980 725 B1 (SWIECONEK PAUL D [US]) 27 December 2005 (2005-12-27) * the whole document * ----- | 1-4,7 | INV. G02B6/38 G02B6/44 |
| Y | US 6 526 210 B1 (HARRISON CARL G [US] ET AL) 25 February 2003 (2003-02-25) * the whole document * ----- | 1-4,7 | |

TECHNICAL FIELDS SEARCHED (IPC)

G02B

~~The present search report has been drawn up for all claims~~

| Place of search | Date of completion of the search | Examiner |
|---|---|---|
| Munich | 22 July 2010 | Frisch, Anna Maria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                  
& : member of the same patent family, corresponding document

EPO FORM 1503 03.82 (P04C01)

Europäisches
Patentamt

European
Patent Office

Office européen
des brevets

**Application Number**

EP 10 00 6046

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-4, 7

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 10 00 6046

The Search Division considers that the present European patent application does not comply with the requirements of unity of invention and relates to several inventions or groups of inventions, namely:

1. claims: 1-4, 7

   Subject 1 relates to an optical fibre adapter module with a common aperture received at least two adapters and with labeling means, to the kind of the adapters used, to details of a further back side adapter, and to the number of adapters used.
   ---

2. claim: 5

   Subject 2 also relates to an optical fibre adapter module with a common aperture received at least two adapters and with labeling means, and to details of the labeling means in the form of a key.
   ---

3. claim: 6

   Subject 3 also relates to an optical fibre adapter module with a common aperture received at least two adapters and with labeling means, and to the distance of the adapters.
   ---

4. claims: 8-11

   Subject 4 also relates to an optical fibre adapter module with a common aperture received at least two adapters and with labeling means, and to details of a fibre harness used in the module.
   ---

## ANNEX TO THE EUROPEAN SEARCH REPORT
## ON EUROPEAN PATENT APPLICATION NO.

EP 10 00 6046

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2010

| Patent document cited in search report | Publication date | Patent family member(s) | Publication date |
|---|---|---|---|
| US 6980725 B1 | 27-12-2005 | NONE | |
| US 6526210 B1 | 25-02-2003 | NONE | |

EPO FORM P0459

For more details about this annex : see Official Journal of the European Patent Office, No. 12/82

## REFERENCES CITED IN THE DESCRIPTION

**Patent documents cited in the description**

- US 12231144 B

- US 10256799 B